# EUROPEAN PATENT APPLICATION

(11) **EP 4 082 359 A1**
(43) Date of publication of application: **02.11.2022**
(21) Application number: 21170727.8
(22) Date of filing: 27.04.2021
(51) Int. Cl.: A23L 29/00, A23L 33/135, A23L 33/14

(54) **NUTRACEUTICAL COMPOSITION COMPRISING ALCOHOL DEHYDROGENASE ENZYME TO PREVENT AND/OR RELIEF ALCOHOL CONSUMPTION DISORDERS**

(71) Applicant: Boumelki, Kharima, 1140 Evere (BE)
(72) Inventor: Boumelki, Kharima, 1140 Evere (BE)
(74) Representative: Touroude & Associates

(57) **Abstract**

The present invention relates to a nutraceutical composition for oral administration to prevent or relief the non-therapeutic alcohol consumption disorders, comprising an alcohol dehydrogenase enzyme and at least one nutraceutically acceptable carrier. The invention concern also the use of the said nutraceutical composition to prevent or relief the non-therapeutic alcohol consumption disorders. In another aspect, the invention concerns a method for the non-therapeutic prevention and/or relief of alcohol consumption disorders, preferably chosen among nausea, vomiting, less consciences, fatigue, balance and visual trouble and speech disorder, comprising administering orally the said nutraceutical composition.

## Description

### Field of the invention

The present invention relates to a nutraceutical composition for oral administration to prevent or relief the non-therapeutic alcohol consumption disorders, comprising an alcohol dehydrogenase enzyme and at least one nutraceutically acceptable carrier. The invention concern also the use of the said nutraceutical composition to prevent or relief the non-therapeutic alcohol consumption disorders. In another aspect, the invention concerns a method for the non-therapeutic prevention and/or relief of alcohol consumption disorders, preferably chosen among nausea, vomiting, less consciences, fatigue, balance and visual trouble and speech disorder, comprising administering orally the said nutraceutical composition.

### State of the art

The ethanol contained in beverages and product thereof is well identified as responsible of negative effect in term of human behaviour and health in general. According to recent epidemiological investigations, this issue is a worldwide phenomenon which touch all class of the human people whatever their status. Moreover, the incidence of alcohol damage is well known and the cost associated is estimated to several millions of dollars for the society. For the time being, any solution has been identified in order to decrease the effect of ethanol absorption such as nausea, vomiting, less consciences, fatigue, balance and visual trouble and speech disorder.

Alcohol consumption disorders are characterized by less consciences, fatigue and a number of other associated disorders, like nausea, vomiting, balance and visual trouble and speech disorder,

These disorders, when they are not related to a chronic disease are following:

Until 0.5g corresponding to 10.85 mmol/1 no major disorders are identified

Between 0.5 to 1.5 g/l, means 11 to 32.5 mmol/l the person shows a light alcohol-intoxicated state related to face redness, a euphoria state, a red conjunctivitis associated with a decrease of capabilities and critical sense.

Between 1.5 to 3 g/l, means 32.5 to 65 mmol/l, the disorders are nausea, vomiting, balance and visual trouble and speech disorder.

Beyond this rate the disorders are more severe meaning possible coma or died, but these conditions are not the subject of the invention.

The alcoholemy rate is function of several factors among the quantity of alcohol ingested compare to the weight of the person, the alcohol level of the beverages ingested the moment of the ingestion and the food or not ingested before. The health and the sex of the person are also taken into account for the rate of alcoholemy.

The rate of alcohol decreases in average about 0.085 to 0.15 per blood liter/hour

To date no efficient way has been found in order to decrease the alcohol rate in the blood and the negative disorder associated. Several non-scientific has experimented the dilution of alcohol with water in order to dilute his effect, and a Japanese study tested to drink a tomato juice in order to boost the oxidation of specific enzyme that affect the transformation of ethanol in ethanal by producing pyruvique acid. So at the present time, there is no known substance or composition which alleviates the non-therapeutic disorders of alcohol consumption. Thus, there is a need for a nutraceutical composition that allow these benefits and which is effective for the prevention and/or relief of said non-therapeutic alcohol consumption disorders like nausea, vomiting, less consciences, fatigue, balance and visual trouble and speech disorder.

To solve these non-therapeutic disorders, the Applicant has developed a new effective nutraceutical composition comprising an alcohol dehydrogenase enzyme and an enteric coating, allowing to prevent or relief alcohol consumption disorders like nausea, vomiting, less consciences, fatigue, balance and visual trouble and speech disorder.

### Detailed description of the invention

According to a first aspect, the invention concerns a nutraceutical composition for oral administration to prevent or relief the non-therapeutic alcohol consumption disorders comprising:
- an alcohol dehydrogenase enzyme; and
- at least one nutraceutically acceptable carrier.

"Nutraceutical composition" refers to a substance for human consumption, whether comprised of a single ingredient or a mixture of ingredients, whether liquid, liquid containing or solid or in powder, whether primarily carbohydrate, fat, protein or any mixture thereof, whether edible per se or requiring processing like cooking, mixing, cooling, mechanical treatment and the like.

An alcohol dehydrogenase enzyme is an enzyme coming from this class of zinc enzymes which catalyse the oxidation of primary and secondary alcohols to the corresponding aldehyde or ketone.

By the term "nutraceutically acceptable carrier" is meant a compound which is non-toxic, is not irritating to the human gastrointestinal system, and which can be mixed with an alcohol dehydrogenase enzyme to form an efficient composition to prevent or relief the non-therapeutic alcohol consumption disorders.

Preferably, said at least one nutraceutically acceptable carrier is chosen among: sugars, starches, silica, clay, cellulose and its derivatives, powdered tragacanth, malt, gelatin, talc, stearic acid, magnesium stearate, calcium sulfate, vegetable oil, synthetic oils, polyols, phosphate buffer solutions, cocoa butter, emulsifiers, silica gel matrix, mineral clays, synthetic activated carbon, biopolymers, or polymers.

More preferably, said at least one nutraceutically acceptable carrier is chosen among :
- sugars such as lactose, glucose and sucrose ;
- starches such as corn starch and potato starch or n-octenyl succinic anhydride starch ;
- silica or clay ;
- cellulose and its derivatives, such as sodium carboxymethycellulose, ethylcellulose, and cellulose acetate;
- powdered tragacanth;
- malt;
- gelatin;
- talc;
- stearic acid;
- magnesium stearate;
- calcium sulfate;
- vegetable oils such as corn oil, cotton seed oil, and olive oil;
- synthetic oils containing a mixture of liquid saturated hydrocarbons such as for example Marcol 52, 82 or 152;
- polyols such as propylene glycol, glycerin, sorbitol, mannitol, and polyethylene glycol;
- phosphate buffer solutions;
- cocoa butter;
- emulsifiers;
- organic or inorganic subtracts such as silica gel matrix, mineral clays (bentonite kaolinite), synthetic activated carbon, biopolymers;
- Polymers such as cellulosic polymers HPMC HPC HEC, glycols polymers, vinyl derivatives or acrylic polymers activated carbon.

In one preferred embodiment, said at least one nutraceutically acceptable carrier is chosen among vegetable oils such as corn oil, cotton seed oil, and olive oil, and synthetic oils containing a mixture of liquid saturated hydrocarbons.

The use of oil as a nutraceutically acceptable carriers allows to boost the effects of the composition according to the invention, as the oil covers the stomach lining and allow to decrease the effects of the alcohol to the organism of the consumers. This effect is driven by the alcohol diffusion mechanism, which contain the passage through the stomach lining and which is limited by the presence of this oil.

Other compatible nutraceutically additives and actives may be included in the nutraceutically acceptable carrier for use in the composition of the present invention.

According to the invention the alcohol dehydrogenase enzyme triggers the transformation of alcohol molecule, especially ethanol by generating acetic acid as final product, and acts as a primary activating enzyme able to control the oxidation of ethanol mechanisms of the cells' metabolic processes against alcohol poisoning. This alcohol dehydrogenase enzyme take allow to decrease the level of organism alcohol saturation and allow the prevention and/or relief of said non-therapeutic alcohol consumption disorders.

The approach of the invention is dedicated to help the body to eliminate the alcohol in a certain measure by converting it both in the stomach and the gastro intestinal tract in a safe product (acetic acid) before than this one goes into the blood stream and causes the disorders discussed above for the organism. By this way, the effectiveness of the nutraceutical composition according to the invention allow to decrease all the said disorders associated in particular with a light alcoholism consumption. Moreover, this approach is an easily and non-dangerous way for the organism to decrease alcohol consumption disorders since only acetic acid is formed at the final step.

An enteric coating is a barrier applied to oral medication that prevents its dissolution or disintegration in the gastric environment.

The effectiveness of the composition according to the invention is heightened by the enteric coating which is chosen among: cellulose acetate phthalate, polyvinyl acetate phthalate, hydroxyl-propyl-methyl cellulose phthalate, methacrylic acid copolymers, fat-wax, shellac, zein, aqua coating, coacervation, prilling with alginate or chitin in order to get a control release that tune the biochemistry molecule transformation in the human body. In the context of the invention, said enteric coating means that the alcohol dehydrogenase enzyme is coated with a material that permits transit through the stomach to the small intestine before the medication is released.

The dehydrogenase enzyme is coated in order to catalyse the transformation of ethanol in acetic acid directly in the stomach and gastrointestinal tract and consequently decrease the quantity of ethanol metabolized by the body through the liver

This enteric coating is needed to overcome the acidity of the stomach and of being partially absorbed at an intestinal level. Alcohol dehydrogenase are unstable at pHs below 7 which prevail within the confines of the stomach.

Another possibility for the coating should be all ingredients use in fluid bed coating or spray drying. All possibilities of encapsulation and ingredients thereof are also suitable as example coacervation, prilling with alginate or chitin and so on. Alternatively, a solution or emulsion in an aqueous medium presented under form of beverages are very interesting in order to bring the water necessary for avoid hangover symptom due to the dehydration of the body. However, other galenic form may be used in a solid form (they are quite stable in compressed form when protected from light). Other suitable encapsulation or coating process will become apparent to those skilled in the art.

In one embodiment, said alcohol dehydrogenase enzyme is in a quantity of 1 to 15%, preferably 1 to 10%, by weight of the total composition.

In one embodiment, said alcohol dehydrogenase enzyme is chosen among mammalian liver alcohol dehydrogenase or yeast alcohol dehydrogenase (YADH) or microbial alcohol dehydrogenase.

Mammalian liver alcohol dehydrogenase (LADH) is alcohol dehydrogenase enzyme from the liver, which is known to catalyze the oxidation and reduction of a wide variety of alcohols and aldehydes. An example of LADH may be Horse liver alcohol dehydrogenase.

Yeast alcohol dehydrogenase (YADH) is alcohol dehydrogenase enzyme from yeast, which is known to reduced acetaldehyde to ethanol during the fermentation of glucose. An example of YADH may be from *Saccharomyces cerevisiae.*

In one embodiment, said alcohol dehydrogenase enzyme is brought by plant extract or yeast strain or bacteria strain, preferably by immobilized acetobacter.

By plant extract, the invention means compound or composition coming from a plant species comprising alcohol dehydrogenase enzyme.

By yeast strain is according to the invention a strain of yeast which produce alcohol dehydrogenase enzyme, and can bring this enzyme to the nutraceutical composition of the invention.

By bacteria strain is according to the invention a strain of bacteria which produce alcohol dehydrogenase enzyme, and can bring this enzyme to the nutraceutical composition of the invention.

Immobilized acetobacter are according to the invention bacteria from this gender which are immobilized, by example on a surface.

By example, the acetobacter living cells can be immobilized by adsorption onto a ceramic support.

In one embodiment the nutraceutical composition according to the invention further comprises acetaldehyde dehydrogenase enzyme.

Acetaldehyde dehydrogenase enzyme is a dehydrogenase enzyme that converts acetaldehyde (ethanal) to acetyl coenzyme A.

The alcohol dehydrogenase enzyme coupled with an enteric coating and associated with acetaldehyde dehydrogenase enzyme have greater beneficial effects against the effects of alcohol molecules.

In one embodiment, said acetaldehyde dehydrogenase enzyme being in a quantity of 1 to 15%, preferably 1 to 10%, by weight of the total composition.

The nutraceutical composition of the invention may also eventually contain some zinc or zinc derivative and nicotinamide adenine dinucleotide (NAD). It is also possible that our active ingredient be combined in a galenic formulation with a co-substance which is effective to boost the transformation of alcohol in acetic acid by alcohol dehydrogenase.

In one embodiment, the nutraceutical composition according to the invention further comprises Nicotinamide Adenine Dinucleotide and/or zinc.

Nicotinamide Adenine Dinucleotide is a heteroside that plays an essential role in the redox reactions of the living cell. This coenzyme present in most living cells and derived from the B vitamin nicotinic acid serves classically as a reductant in various metabolic processes

Zinc is an essential metal for the action of hundreds of enzymes in the body.

In one embodiment, said Nicotinamide Adenine Dinucleotide and/or zinc is in a quantity of 1 to 20% by weight of the total composition.

The invention is administrated by an orally take of the nutraceutical composition.

In one embodiment, the nutraceutical composition according to the invention is for oral administration in a form of pill, tablet, solid tablet, dispersible powder or granule, capsule, soft gelatin capsule, hard gelatin capsule, lozenge, dragees, sachet, granules, emulsion, caplet, compressed tablet, cachet, wafer, sugar-coated pill, sugar coated tablet, syrup, or dispersing/or disintegrating tablet, powder, effervescent tablet, aerosols, preferably tablet, soft gelatin capsule, hard gelatin capsule, or granules.

This presentation of the composition allows to deliver said composition to the stomach.

Other helpful co-substance could be added to help to decrease the alcohol consumption disorders and improve recuperation.

In one embodiment, the nutraceutical composition according to the invention further comprises at least one nutraceutically acceptable excipient.

As used herein, the term 'at least one nutraceutically acceptable excipient' means an excipient which is food grade and safe for human consumption, and which can be added in the compositions herein in specific percentages and which aid the formulation process. At least one nutraceutically acceptable excipient can be selected from the group of antioxidants, organic solvent, inert core, coating polymer, film former, antiglidant, diluent, and combinations thereof.

In one embodiment, said at least one nutraceutically acceptable excipient is selected from the group of antioxidants, organic solvent, inert core, coating polymer, film former, antiglidant, diluent, and combinations thereof.

In one embodiment, said nutraceutical composition is taken before alcohol consumption, at the same time of alcohol consumption, or after alcohol consumption, preferably before.

In one embodiment, said nutraceutical composition is taken before alcohol consumption, at the same time of alcohol consumption, and after alcohol consumption, preferably before.

According to a second aspect, the invention relates to the use of a nutraceutical composition according to the invention prevent or relief the non-therapeutic alcohol consumption disorders.

By "prevent or relief the alcohol consumption disorders" the invention means the decrease of said disorders, compare to the same disorders without the intake of the composition according to the invention.

In one embodiment, said non-therapeutic alcohol consumption disorders are chosen among nausea, vomiting, less consciences, fatigue, balance and visual trouble and speech disorder, correlated to the alcohol consumption.

According to a third aspect, the invention relates to a method for the non-therapeutic prevention and/or relief of alcohol consumption disorders, preferably chosen among nausea, vomiting, less consciences, fatigue, balance and visual trouble and speech disorder, comprising administering orally a nutraceutical composition according to the invention.

### Example :

### Example 1 : Test of enzyme activity in the form of tablets.

A beaker is prepared containing 50 g of water at a pH 6-7 and a constant temperature of 35°C. 1ml of ethanol are dissolved in the beaker and agitate. 10 mg of immobilized acetobacter or alcohol dehydrogenase enzyme are added and stirred. The pH is then controlled and followed. A simple acid base dosage is realized as soon as the pH remain stable.

Example of a formulation for tablets of 80 mg/CPM

| | |
|---|---|
| 250 mg | Immobilized acetobacter or alcohol dehydrogenase enzyme |
| 2,5 mg | Vitamine E |
| 5 mg | Vegetable magnesium stearate |
| 3 mg | Microcristalline cellulose |
| 41 mg | hydrated silica |
| 5 mg | Zinc sulphate |
| 1 mg | Dibasic calcium phosphate |

In vitro test of the activity of the immobilized acetobacter or alcohol dehydrogenase enzyme in artificial stomach :
For Simulated gastric digestion Simulated gastric fluid was formulated with sodium chloride (34 mM) and hydrochloric acid with a final pH of 2.5 (USP31-NF26, 2008). This pH value was chosen according to *(Gbassi, Vandamme, Yolou, and Marchioni (2011))* and corresponds to the encountered pH in stomach after consuming a classical meal. Finally, 0.64 mg of pepsin was added to 200 mL of gastric juice. The simulation of the stomach digestion was done in a temperature-controlled reactor, made of glass, with a magnetic stirrer (150 RPM). The coated Immobilized acetobacter or alcohol dehydrogenase enzyme (1g) were introduced in 200 mL of gastric solution and left for 2 h at 37 °C to imitate human body temperature. During particle digestion, the reactor was directly connected to an acid base analyzer (Fig. 2). A define quantity of alcohol is introduced in the gastrofluid. Once the gastrointestinal protective coating is applied, the product is sampled and 2 tablets are immersed in the gastric fluid plus ethanol to follow the disintegration rate of the tablet and a conventional acid base dosage is then realized to follow the transformation of alcohol in citric acid.

The dosage by gas chromatography and mass spectrometry indicates a decrease of alcohol.

Example 2: Test of activity of the formulation of Example 1 with 40 consumers.

Two groups of 20 consumers are formed, fasting and sober, of each gender and of age between 21 and 65, and of weight between 50 and 120 kg.

Group 1 receives one tablet of the formulation of example 1 prior to a consumption of two beers with 5% alcohol each.

Group 2 consumes only two beers with 5% alcohol each.

A blood sample of each of the participant is collected before the take of the tablet of the invention (group 1) or before the take of the two beers (Group 2).

A second blood sample is collected 1 hour after the consumption of the beers for both groups.

Both samples for each consumer are compared and the alcoholaemia differences are determined.

Group 1 has an average blood alcohol content less important that Group 2.

Example 3: Test of enzyme activity in the form of hard gelatin capsule

The same protocol as in Example 1 was used to study a composition comprising: 250 mg of a mixture of alcohol dehydrogenase and vegetable oil and n-octenyl succinic anhydride starch are filled in hard gelatin capsule. The composition contains 25 mg of alcohol dehydrogenase enzyme.

As in Example 1, the dosage by gas chromatography and mass spectrometry indicates a decrease of alcohol.

## Claims

1. A nutraceutical composition for oral administration to prevent or relief the non-therapeutic alcohol consumption disorders comprising:
- an alcohol dehydrogenase enzyme; and
- at least one nutraceutically acceptable carrier.

2. The nutraceutical composition according to claim 1, wherein said alcohol dehydrogenase enzyme is in a quantity of 1 to 15%, preferably 1 to 10%, by weight of the total composition.

3. The nutraceutical composition according to any one of claim 1 and 2, wherein said alcohol dehydrogenase enzyme is chosen among mammalian liver alcohol dehydrogenase or yeast alcohol dehydrogenase or microbial alcohol dehydrogenase.

4. The nutraceutical composition according to any one of claim 1 and 2, wherein said alcohol dehydrogenase enzyme is brought by plant extract or yeast strain or bacteria strain, preferably by immobilized acetobacter.

5. The nutraceutical composition according to any one of claim 1 to 4, wherein said at least one nutraceutically acceptable carrier is chosen among: sugars, starches, silica, clay, cellulose and its derivatives, powdered tragacanth, malt, gelatin, talc, stearic acid, magnesium stearate, calcium sulfate, vegetable oil, synthetic oils, polyols, phosphate buffer solutions, cocoa butter, emulsifiers, silica gel matrix, mineral clays, synthetic activated carbon, biopolymers, or polymers.

6. The nutraceutical composition according to any one of claim 1 to 5, further comprising acetaldehyde dehydrogenase enzyme.

7. The nutraceutical composition according to claim 6, said acetaldehyde dehydrogenase enzyme being in a quantity of 1 to 15%, preferably 1 to 10%, by weight of the total composition.

8. The nutraceutical composition according to any one of claim 1 to 7, further comprising Nicotinamide Adenine Dinucleotide and/or zinc.

9. The nutraceutical composition according to claim 8, wherein said Nicotinamide Adenine Dinucleotide and/or zinc is in a quantity of 1 to 20% by weight of the total composition.

10. The nutraceutical composition according to any one of claim 1 to 9, which for oral administration is in a form of pill, tablet, solid tablet, dispersible powder or granule, capsule, soft gelatin capsule, hard gelatin capsule, lozenge, dragees, sachet, granules, emulsion, caplet, compressed tablet, cachet, wafer, sugar-coated pill, sugar coated tablet, syrup, or dispersing/or disintegrating tablet, powder, effervescent tablet, aerosols, preferably tablet, soft gelatin capsule, hard gelatin capsule, or granules.

11. The nutraceutical composition according to any one of claim 1 to 10, further comprising at least one nutraceutically acceptable excipient.

12. The nutraceutical composition according to claim 11, said at least one nutraceutically acceptable excipient being selected from the group of antioxidants, organic solvent, inert core, coating polymer, film former, antiglidant, diluent, and combinations thereof.

13. Use of a nutraceutical composition according to any one of claim 1 to 12, to prevent or relief the non-therapeutic alcohol consumption disorders.

14. Use of a nutraceutical composition according to claim 13, wherein said non-therapeutic alcohol consumption disorders are chosen among nausea, vomiting, less consciences, fatigue, balance and visual trouble and speech disorder, correlated to the alcohol consumption.

15. Method for the non-therapeutic prevention and/or relief of alcohol consumption disorders, preferably chosen among nausea, vomiting, less consciences, fatigue, balance and visual trouble and speech disorder, comprising administering orally a nutraceutical composition according to any one of claim 1 to 12.
